(19) Europäisches Patentamt
European Patent Office
Office européen des brevets

(11) EP 0 940 430 A1

(12) # EUROPEAN PATENT APPLICATION

(43) Date of publication:
08.09.1999 Bulletin 1999/36

(51) Int. Cl.[6]: C08K 3/34, C08L 77/00

(21) Application number: 99102774.9

(22) Date of filing: 23.02.1999

(84) Designated Contracting States:
AT BE CH CY DE DK ES FI FR GB GR IE IT LI LU MC NL PT SE
Designated Extension States:
AL LT LV MK RO SI

(30) Priority: 03.03.1998 JP 5032398
03.02.1999 JP 2610199

(71) Applicant: UNITIKA LTD.
Amagasaki-shi, Hyogo 660-0824 (JP)

(72) Inventors:
- Yoshikawa, Masaki, c/o Unitika Ltd. Uji-shi, Kyoto (JP)
- Fujimoto, Koji, c/o Unitika Ltd. Uji-shi, Kyoto (JP)
- Tamura, Tsuneo, c/o Unitika Ltd. Uji-shi, Kyoto (JP)
- Ida, Takashi, c/o Unitika Ltd. Uji-shi, Kyoto (JP)
- Kojima, Kazushige, c/o Unitika Ltd. Uji-shi, Kyoto (JP)
- Kokuryo, Sachiko, c/o Unitika Ltd. Uji-shi, Kyoto (JP)

(74) Representative: HOFFMANN - EITLE
Patent- und Rechtsanwälte
Arabellastrasse 4
81925 München (DE)

(54) **Polyamide composite material**

(57) A polyamide composite material comprising (A) a polyamide resin and (B) silicate layers originating from a layered silicate selected from the group consisting of montmorillonite, swellable fluoromica, vermiculite, and hectorite, dispersed in said polyamide resin on a molecular level. The content of sodium in an inorganic ash of the polyamide composite material is a specific percentage or less by weight according to each layered silicate.

EP 0 940 430 A1

## Description

### FIELD OF THE INVENTION

This invention relates to a polyamide composite material which provides moulded articles, films, sheets and fibres showing excellent mechanical strength, toughness, heat resistance and dimensional stability and also high tensile breaking elongation with a small standard deviation.

### BACKGROUND OF THE INVENTION

Polyamide resin compositions reinforced with fibrous reinforcing materials such as glass fibre and carbon fibre or inorganic fillers such as calcium carbonate are widely known. However, since these reinforcing materials have poor affinity to polyamide, the reinforced polyamide compositions have reduced toughness while mechanical strength and heat resistance are improved. Further, moulded articles of a fibre-reinforced polyamide resin composition suffer from appreciable warp. Besides, in using the inorganic fillers, substantial improvement in mechanical strength or heat resistance cannot be obtained unless they are added in a large quantity.

In order to eliminate these disadvantages of conventional reinforced polyamide resin compositions, a composition comprising polyamide and a layered silicate typified by montmorillonite has been proposed as disclosed in U.S. Patent 4,739,007. In this resin composition silicate layers are uniformly dispersed in the polyamide resin on the molecular level by introducing polyamide chains into the laminae of a layered silicate. In the case of using montmorillonite for the above purpose, as in the specification of U.S. Patent 4,739,007, the montmorillonite must be swelled with organic salts (e.g., an ammonium salt of an aminocarboxylic acid, an onium salt) and then isolated, before the monomer or monomers forming the polyamide resin are polymerised.

U.S. Patent 5,414,042 describes that, by mixing a monomer to form a polyamide resin and a swellable fluoromica and polymerising the monomer under a pressure of, usually, 10 $kg/cm^2$ or higher, a polyamide composite material is obtained having silicate layers of the swellable fluoromica dispersed in the polyamide resin on the molecular level. Furthermore, the polyamide composite is said to have excellent mechanical properties and heat resistance, and can be obtained without the organic salt treatment. However, this technique still has a problem in that moulded articles obtained therefrom have insufficient tensile elongation and large standard deviation of tensile breaking point values. This is due to the inadequate exchange of ion-exchangeable cations present between laminae of a swellable fluoromica with an organic cation such as an aminocarboxylic acid cation and a lactam cation.

### SUMMERY OF THE INVENTION

It is therefore an object of the present invention to provide a polyamide composite material which provides moulded articles, films, sheets and fibres having excellent mechanical strength, toughness, heat resistance and dimensional stability and also high tensile elongation with a small standard deviation of breaking point values.

As a result of extensive studies, the present inventors have discovered that by reducing the sodium content of the inorganic ash of the polyamide composite material to a certain percentage or less by weight according to each layered silicate, moulded articles, films, sheets and fibres having sufficient tensile elongation with a small standard deviation as well as excellent mechanical strength, modulus, heat resistance and toughness can be obtained.

The present invention provides a polyamide composite material comprising

(A) a polyamide resin and

(B) silicate layers originating from montmorillonite, swellable fluoromica, vermiculite or hectorite dispersed in the polyamide resin on a molecular level. Such dispersion on the molecular level is ensured if the sodium content in the inorganic ash of the polyamide composite material is 2.1 wt% or less in the case of silicate layers originating from montmorillonite, 2.7 wt% or less in the case where the silicate layers originate from swellable fluoromica, 1.7 wt% or less in the case where the silicate layers originate from vermiculite and 1.5 wt% or less in the case where the silicate layers originate from hectorite.

The present invention also provides a polyamide composite material comprising (A) a polyamide resin and (B) silicate layers originating from a swellable fluoromica dispersed in the polyamide resin on the molecular level, wherein the content of sodium in an inorganic ash of the polyamide composite material is 2.7 wt% or less.

### DETAILED DESCRIPTION OF THE INVENTION

The polyamide composite material comprises polyamide having dispersed therein silicate layers of a layered

silicate on a molecular level. The language "on a molecular level" as used herein means that the layers of the layered silicate are spaced 20 Å or more from each other on average. The spacing between layers of the layered silicate is the distance between the centres of gravity of substantially every layer of a layered silicate. The language "dispersed" as used herein means that individual laminae or laminates having not more than 5 laminae, on average, of a layered silicate are present in parallel with each other and/or at random, not less than 50%, preferably 70% or more, of the laminae or laminates being dispersed without forming masses.

The characteristic mechanical properties, heat resistance, dimensional stability and elongation properties of the polyamide composite material of the invention are apparent only when the layers of the layered silicate in the polyamide resin are dispersed on a molecular level. Therefore, an essential technological problem relates to enhancing the degree of dispersion ("dispersity" hereafter) of the silicate layers. However, the main evaluation methods available thus far are the wide-angle X-ray diffraction method (WAXD) and photographic observation from transmission electron microscopy (TEM), both of which lack quantitative capability.

The inventors considered that the formation of polyamide composite material wherein silicate layers of a layered silicate are dispersed in a polyamide resin on the molecular level, is achieved by (1) an ion exchange reaction of an ion-exchangeable cation between the laminae of the layered silicate with an organic cation followed by polymerisation of a monomer to form a polyamide resin between the laminae, or by (2) melt-kneading the ion-exchanged layered silicate with a polyamide resin. Namely, in order to become exfoliated, a layered silicate must pass through an ion exchange process as described above. Insufficient ion exchange results in insufficient exfoliation of the layered silicate, resulting in a polyamide composite material with low dispersity of silicate layers therein.

Cations between the laminae which have not participated in the ion exchange reaction are preserved between the laminae of the layered silicate which have not exfoliated in the polyamide composite material, and therefore remain in an inorganic ash of the material. On the other hand, alkali metals which have been pushed out from between the layers can be eliminated from the polyamide composite material by a hot-water treatment as described below. Therefore, in the case of manufacturing a polyamide composite material using a layered silicate with a known cation exchange capacity, a ratio of ion-exchangeable cations which participate in the ion-exchange reaction, namely, an ion exchange ratio, can be estimated and utilised for a quantitative index of the dispersity of the silicate layers.

In practice, a layered silicate contains non-exchangeable cations to some extent that can also remain in the inorganic ash. Moreover, since there are a number of types of layered silicate, the amount of exchangeable or non-exchangeable cations between the laminae deviates from one to another. To obtain the ion-exchange ratio therefore requires complicated experiments and evaluations.

The dispersed state of the silicate layers on the molecular level in the polyamide resin is obtained by using such a type of layered silicate that has an alkali metal as the ion-exchangeable cation. Examples of the alkali metal include lithium and sodium. Industrially available layered silicates have, in general, sodium as an ion-exchangeable cation, which are called sodium-type layered silicates.

The present inventors discovered that, as a result of studies on ion-exchange ratios of polyamide composite materials manufactured from a variety of sodium-type layered silicates, sufficient ion exchange is achieved when the sodium content of the inorganic ash falls within a scope as described below, and that the elevated dispersity of silicate layers results in a polyamide composite material having excellent mechanical properties, heat resistance, dimensional stability and elongation properties. Sodium content of the inorganic ash can thus be utilised as a convenient index for determining the dispersity.

In the polyamide composite material of the present invention, the content of sodium in the inorganic ash of the material is as follows. The sodium content should be 2.1 wt% or less in the case of montmorillonite, 2.7 wt% or less in the case of swellable fluoromica, 1.7 wt% or less in the case of vermiculite, and 1.5 wt% or less in the case of hectorite. Preferred sodium content in the inorganic ash of the material is, 1.6 wt% or less in the case of montmorillonite, 2.2 wt% or less in the case of swellable fluoromica, 1.0 wt% or less in the case of vermiculite, and 1.1 wt% or less in the case of hectorite. Such polyamide composite materials exhibit a particularly good balance in mechanical properties, heat resistance, dimensional stability and tensile elongation properties.

The polyamide resin is a polymer having an amide linkage, which is prepared from a monomer such as a lactam or an aminocarboxylic acid, or monomers such as a diamine and a dicarboxylic acid (or a nylon salt comprising a pair of them).

Examples of monomers which constitute the polyamide resin include 6-aminocaproic acid, 11-aminoundecanoic acid, 12-aminododecanoic acid and p-aminomethylbenzoic acid as an aminocarboxylic acid, and the lactam includes ε-caprolactam, ω-undecanolactam and ω-laurolactam.

Examples of the diamine include tetramethylenediamine, hexamethylenediamine, undecamethylenediamine, dodecamethylenediamine, 2,2,4-/2,4,4-trimethylhexamethylenediamine, 5-methylnonamethylenediamine, 2,4-dimethyloctamethylenediamine, m-xylylenediamine, p-xylylenediamine 1,3-bis(aminomethyl)cyclohexane, 1-amino-3-aminomethy-3,5-trimethylcyclohexane, bis(4-aminocyclohexyl)methane, 2,2-bis(4-aminocyclohexyl)propane, bis(aminopropyl)piperazine and aminoethypiperazine. Examples of the dicarboxylic acid include adipic acid, suberic acid, azelaic

acid, sebacic acid, dodecanedioic acid, terephthalic acid, isophthalic acid, naphthalenedicarboxylic acid, 2-chloroterephthalic acid, 2-methyterephthalic acid, 5-methylisophthalic acid, 5-sodiumsulfoisophthalic acid, hexahydroterephthalic acid, hexahydroisophthalic acid and diglycol acid. A nylon salt comprising a pair of a diamine and a dicarboxylic acid can also be used.

Specific examples of the polyamide resin include polycaproamide (nylon 6), poly(tetramethylene adipamide) (nylon 46), poly(hexamethylene adipamide) (nylon 66), poly(hexamethylene sebacamide) (nylon 610), poly(hexamethylene dodecamide) (nylon 612), poly(undecamethylene adipamide) (nylon 116), polyundecamide (nylon 11), polydodecamide (nylon 12), poly(trimethyhexamethylene terephthalamide) (nylon TMDT), poly(hexamethylene isophthalamide) (nylon 6I), poly(hexamethylene terephthal/isophthalamide) (nylon 6T/6I), poly[bis(4-aminocyclohexyl)methane dodecamide], (nylon PACM12), poly[bis(3-methyl-4-aminocyclohexyl)methane dodecamide] (nylon dimethyPACM12), poly(m-xylylene adipamide), (nylon MXD6), poly(undecamethylene terephthalamide) (nylon 11T), poly(undecamethylene hexahydroterephthalamide) [nylon 11T(H)], and a copolyamide or mixed polyamide thereof. Of these, nylon 6, a nylon 6-based copolymer, nylon 11, a nylon 11-based copolymer, nylon 12, a nylon 12-based copolymer, nylon 66, and a nylon 66-based copolymer are preferred.

The polyamide resin preferably has a relative viscosity ranging from 1.5 to 5.0 as measured at a concentration of 1 g/dl in 96 wt% concentrated sulfuric acid at 25 °C.

The layered silicate for use in the present invention has a layer structure made up of negatively charged laminae mainly comprising a silicate and alkali metal cations therebetween which are ion-exchangeable. The preferred cation exchange capacity of the layered silicate ranges from 50 to 200 meq/100g as measured by the method stated below.

The layered silicates for use in this invention are preferably selected from the group consisting of montmorillonite, swellable fluoromica, vermiculite and hectorite, which are either naturally occurring or synthetic.

The montmorillonite has a structure represented by the following formula. It is obtained by purifying a naturally occurring montmorillonite.

$$Na_xSi_4(Al_{2-x}Mg_x)O_{10}(OH)_2 \cdot nH_2O$$

(wherein x represents a coefficient satisfying 0.25≦x≦0.6; and n is an integer satisfying n≧0, and represents the number of water molecules binding to the cation between laminae)
In addition, isomorphous substitutes of montmorillonite such as magnesian montmorillonite, iron montmorillonite, and iron magnesian montmorillonite represented by the following three respective formulae, can also be used.

$$Na_xSi_4(Al_{1.67-x}Mg_{0.5+x})O_{10}(OH)_2 \cdot nH_2O$$

$$Na_xSi_4(Fe(III)_{2-x}Mg_x)O_{10}(OH)_2 \cdot nH_2O$$

$$Na_xSi_4(Fe(III)_{1.67-x}Mg_{0.5+x})O_{10}(OH)_2 \cdot nH_2O$$

(wherein x a represents a coefficient satisfying 0.25≦x≦0.6; and n is an integer satisfying n≧0 and represents the number of water molecule binding to the cation between laminae)

In general, montmorillonite has ion-exchangeable alkali or alkaline earth metal cations (e.g., sodium, calcium) between its laminae. The content ratios of those cations vary according to the place of production. The montmorillonite for use in this invention is preferably one in which cations between laminae are converted into sodium by, for example, an ion-exchange treatment. Sodium montmorillonite purified by elutriation (a separation process based on velocity difference of falling particles in water) is also preferred.

The swellable fluoromica is represented by the following formula and can be easily synthesised.

$$\alpha(NaF) \cdot \beta(aMgF_2 \cdot bMgO) \cdot \gamma SiO_2$$

(wherein α, β, γ, a, and b each represents a coefficient satisfying 0.1≦α ≦2, 2≦β≦3.5, 3≦γ≦4, 0≦a≦1, 0≦b≦1, and a+b=1 )

Such swellable fluoromica can be synthesised by, for example, a so-called melting method which comprises completely melting a mixture of silicon oxide, magnesium oxide and various fluorides in an electric oven or gas oven at 1400 to 1500°C, and cooling the melt to crystallise a fluoromica and allowing the crystals to grow.

The swellable fluoromica can also be obtained by a method comprising heating a mixture of talc and sodium fluoride or sodium silicofluoride in a porcelain crucible at 700 to 1200°C for a short time to intercalate sodium ion into the spacings of the talc laminae (as disclosed in U.S. Patent 5,204,078). The production of the swellable fluoromica is confirmed by a wide-angle X-ray diffractometry analysis in which a peak corresponding to the thickness of the fluoromica is within 12 to 13Å as the sodium intercalation proceeds. The amount of sodium fluoride or sodium silicofluoride

that is mixed with the talc is preferably in a range of from 10 to 35wt% based on the mixture. If it is out of this range, the production yield decreases.

Vermiculite is represented by the following formulae and can be obtained by purification of a natural vermiculite or by synthesis.

$$Mg_{x/2}(Si_{4-x}Al_x)Al_2O_{10}(OH)_2 \cdot nH_2O, \text{ or}$$

$$Mg_{x/2}(Si_{4-x}Al_x)Mg_3O_{10}(OH)_2 \cdot nH_2O$$

(wherein x represents a coefficient satisfying $0.6 \leqq x \leqq 0.9$; and n is an integer satisfying $n \geqq 0$ and represents the number of water molecules binding to the cation between laminae)

In practice, vermiculite is of the type having magnesium as an ion-exchangeable cation and exhibits only limited swelling. Therefore, the cation should be converted into sodium when used in the present invention.

Hectorite is represented by the following formula and can be obtained by purification of natural hectorite or by synthesis.

$$Na_xSi_4(Mg_{3-x}Li_x)O_{10}(OH)_2 \cdot nH_2O$$

(wherein x represent a coefficient satisfying $0.25 \leqq x \leqq 0.6$; n is an integer satisfying $n \geqq 0$ and represents the number of water molecules binding to the cation between laminae; and the hydroxyl group in the above formula may be substituted by fluorine)

In practice, hectorite has a variety of alkali or alkaline earth metals as Ion-exchangeable cations between its laminae. In the present invention, the cation between the laminae should be converted into sodium, whether natural or synthesised hectorite is used.

In the polyamide composite material of the present invention, amount of the layered silicate is preferably 0.1 to 20 parts by weight per 100 parts by weight of the polyamide resin. Within this range, the reinforcing effect to the polyamide resin matrix by the layered silicate is particularly pronounced and thus a polyamide composite material with excellent mechanical strength and heat resistance can be obtained. This range is also particularly advantageous in view of the elongation properties of the polyamide composite material as well as the overall balance of properties.

The following are some processes for manufacturing the polyamide composite material.

In a first method, a monomer or monomers for forming a polyamide resin are added in the above-described range to the layered silicate in which the sodium content of the resulting composition is reduced to 2.1wt% or less in case of montmorillonite, 2.7 wt% or less in case of swellable fluoromica, 1.7wt% or less in case of vermiculite, or 1.5wt% or less in case of hectorite, by an ion exchange treatment (those layered silicates treated by an ion exchange treatment are hereinafter referred to as "treated layered silicates"), followed by polymerisation under a temperature of 240 to 300°C and a pressure of 2 to 30 kg/cm$^2$ for 1 to 15 hours.

The treated layered silicate is obtained, for example, by a process which comprises mixing, in the presence of water, an acid in an amount of more than equimolar to the total cation exchange capacity of the starting layered silicate and a compound which can react with the acid to form an organic cation, and then adding the layered silicate and treating at a temperature of 60°C or higher. The treated layered silicate thus obtained may be under any condition of water coexistence which includes an aqueous suspension and a swelled form, or under a dried condition after isolation. In conducting the above described ion exchange treatment, it is preferable to use an agitating tool such as a homogenizer to obtain high revolution and high shear, or to use a supersonic radiator, or to treat in an autoclave.

Any acid, either organic or inorganic, can be used without particular limitation as long as its pKa (in 25°C water) is 0 to 6 or negative. Useful acids include benzoic acid, sebacic acid, formic acid, acetic acid, monochloroacetic acid, trichloroacetic acid, trifluoroacetic acid, nitrous acid, phosphoric acid, phosphorous acid, hydrochloric acid, hydrobromic acid, hydroiodic acid, nitric acid, sulfuric acid, perchloric acid, fluorosulfonic acid-pentafluoroantimony (1:1) (available from Aldrich under the trade name of Magic Acid) and fluoroantimonic acid.

Organic compounds which can react with the above described acids to form organic cations include those derived from aminocarboxylic acids represented by formula (1), lactams represented by formula (2), phosphines represented by formula (3), and sulfides represented by formula (4). Aminocarboxylic acids and lactams are preferred.

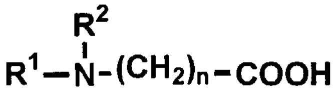

(1)

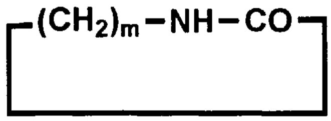

(2)

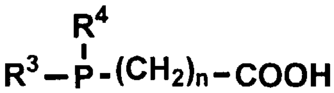

(3)

$$R^5-S-(CH_2)_n-COOH \quad (4)$$

(wherein $R^1$, $R^2$, $R^3$, $R^4$, and $R^5$ are substituents selected from the group consisting of alkyl having 1 to 20 carbon atoms, carboxyl, hydroxyl, phenyl, hydrogen atom, where a hydrogen atom in the alkyl or the phenyl may be substituted by a substituent selected from the group consisting of halogen, hydroxyl, carboxyl, -COOR (R is alkyl having 1 to 5 carbon atoms); n represents an integer of 1 to 20; and m represents an integer of 5 to 20.)

Examples of the aminocarboxylic acids include 6-aminocaproic acid, 10-aminodecanoic acid, 11-aminoundecanoic acid, 12-amiondodecanoic acid, and 18-aminostearic acid. Examples of the lactams include ε-caprolactam, ω-undecanolactam and ω-laurolactam.

A second method for obtaining the polyamide composite material comprises first polymerising a monomer or monomers to form a polyamide resin in the presence of the prescribed amount of the layered silicate and an acid (pKa in 25°C water is 0 to 6 or negative) with an amount of 0.5 or more moles per mole of the cation exchange capacity of the layered silicate, and then treating with hot water. The polymerisation is conducted at a temperature of 240 to 300°C and a pressure of 2 to 30 $kg/cm^2$ for 1 to 5 hours and the above described acid may be added. The addition of the above described acid promotes the dispersion of the silicate layers of the layered silicate into the polyamide resin matrix so that a polyamide composite material which can provide moulded articles having higher strength and higher heat resistance is obtained. This method preferably comprises a process for removing a residual monomer or oligomer and an alkali metal salt as by-products, by treating the polyamide composite material with hot water after the polymerisation.

The addition amount of acid in the second method is preferably 5 or less moles, more preferably, 0.5 to 2 moles, per mole of the cation exchange capacity of the layered silicate. If it exceeds 5 moles per mole of the cation exchange capacity, a longer polymerisation time is needed to achieve a high molecular weight, and enhancement in mechanical properties and heat resistance is insufficient for moulded articles or films obtained from the polyamide composite material.

The alkali metal content of the inorganic ash from the polyamide composite material can be reduced in combination with a partition adding method in which the total amount of a layered silicate and the total amount of an acid are first mixed with a portion of a monomer or monomers to form a polyamide resin, and then the rest of the monomer or monomers are mixed prior to polymerisation. In mixing the starting materials, it is preferable to use an agitating tool such as a homogenizer to obtain high revolution and high shear, or to use a supersonic radiator, or to treat in an autoclave.

A third method for obtaining the polyamide composite material comprises melt-kneading the treated layered silicate and the polyamide resin prepared as described above. This method also provides a polyamide composite material having balanced mechanical properties, heat resistance, dimensional stability and elongation properties. As long as the invention is not impaired, the treated layered silicate used herein may contain moisture and is not necessarily dried and isolated. Melt-kneading is preferably conducted at a temperature of 240~300°C with an extruder having two screws.

If desired, the polyamide resin composition can contain various additives, such as heat stabilisers, antioxidants, reinforcing agents, pigments, weathering agents, flame retardants, plasticisers, mould release agents, and the like, as long as the effects of the present invention are not impaired. These additives are added to the polymerisation

system or while the resin composition is melt-kneaded or melt-moulded.

Suitable heat stabilisers or antioxidants include hindered phenols, phosphorus compounds, hindered amines, sulfur compounds, copper compounds, alkali metal halides, and mixtures thereof.

Suitable reinforcing agents include clay, talc, calcium carbonate, zinc carbonate, wollastonite, silica, alumina, magnesium oxide, calcium silicate, sodium aluminate, sodium aluminosilicate, magnesium silicate, glass balloons, carbon black, zinc oxide, antimony oxide, zeolite, hydrotalcite, metal fibre, metal whiskers, ceramic whiskers, potassium titanate whiskers, boron nitride, graphite, glass fibre and carbon fibre.

The polyamide composite material can be mixed with other thermoplastic polymers as long as the effects of the present invention are not impaired. In this case, the polymers are blended into the polyamide composite material when melt-kneaded or melt-moulded. Examples of thermoplastic polymers with which the polyamide composite material of the present invention can be blended include elastomers, such as polybutadiene, butadiene-styrene copolymers, acrylic rubber, ethylene-propylene copolymers, ethylene-propylene/diene copolymers, natural rubber, chlorinated butyl rubber and chlorinated polyethylene, and acid-modified elastomers (e.g., maleic anhydride modified-elastomer), styrene-maleic anhydride copolymers, styrene-phenylmaleimide copolymers, polyethylene, polypropylene, butadiene-acrylonitrile copolymers, poly(vinyl chloride), poly(ethylene terephthalate), polyacetal, poly(vinylidene fluoride), polysulfone, poly(phenylene sulfide), poly(ether sulfone), phenoxy resins, poly(phenylene ether), poly(methyl methacrylate), poly(ether ketone), polycarbonate, polytetrafluoroethylene and polyarylate.

The polyamide composition material of the present invention can be moulded using general moulding methods such as injection moulding, extrusion moulding, blow moulding and sintering moulding. The moulded articles obtained from the present polyamide composite material have highly improved mechanical properties, heat resistance and dimensional stability over those obtained from a polyamide resin alone, and show a low change in mechanical properties and dimension under the influence of water. The moulded articles are suitable for housings or mechanical parts (e.g., switches, connectors) in the electric and electronics fields, interior and exterior parts, or optical parts (e.g., reflectors) in the automobile field, and gears or bearing retainers in the machinery fields.

The polyamide composite material can be also converted into films and sheets by a tubular method, T-die extrusion method or solution casting method. The films and sheets show improved mechanical properties, heat resistance, dimensional stability and gas barrier property.

The polyamide composite material also can be converted into fibres by a conventional process comprising, for example, melt-spinning, drawing, and, if necessary, additional heat-setting. The fibres thus obtained show excellent strength and modulus and also have a small heat shrinkage in a dry or wet state. Such properties are suitable for various forms such as a circle, annulus, and star-like cross section so as to keep their shape.

The present invention will now be illustrated in greater detail with reference to the following Examples. However, the present invention should not be construed as being limited thereto. The raw materials that were used are as follows.

1. Raw Materials

(1) Montmorillonite

Kunipia F, a highly purified montmorillonite available from Kunimine Kogyo K.K., naturally occurring in Yamagata, Japan (with intercalated Na ions) was used after purifying by elutriation.

(2) Swellable fluoromica (referred to hereinafter as "fluoromica")

A mixture of 85wt% of talc having been ground in a ball mill to an average particle size of 4 μm and 15wt% of sodium silicofluoride having the same average particle size was placed in a porcelain crucible and reacted at 850°C for 1 hour in an electric oven. The resulting powder was analysed by wide-angle X-ray diffractometry. As a result, the peak corresponding to the thickness of 9.2 Å in the c-axis direction of the starting talc disappeared, and a peak corresponding to 12 to 13 Å was observed, which indicated the production of fluoromica. The cation exchange capacity measured as described below was 110meq/100g.

2. Methods of Measurement

(a) Cation Exchange Capacity of Layered Silicates (meq/100g)

Measured in accordance with a standard method for cation exchange capacity (JBAS-106-77) regulated by the Japan Bentonite Association. In an apparatus equipped with an elution vessel, elution tube, and receiving vessel connected in line, substantially all the cations between the laminae of a layered silicate are substituted by $NH_4^+$ using

a 1 N ammonium acetate aqueous solution, the pH of which is adjusted to 7. After thoroughly washing with water and ethanol, the layered silicate in $NH_4^+$ form is soaked into a 10 wt% potassium chloride solution. The cation exchange capacity (meq/100g) of the starting layered silicate is determined by titrating the eluted $NH_4^+$ with a 0.1 N sodium hydroxide solution. Because all the interlayer cations of layered silicates in the present invention constitute sodium, 1 meq/100g of the cation exchange capacity equals to 1 mmol/100g.

(b) Inorganic Ash Content

Precisely weighed dry pellets of the polyamide composite material thus prepared are placed in a porcelain crucible and burnt at 500°C for 15 hours in an electric oven. The residue is defined as inorganic ash. The inorganic ash content is calculated using the following equation.

(Inorganic ash content) (wt%) = [(weight of inorganic ash) / (total weight of the sample)] x 100

(c) Sodium Content of Inorganic Ash

Using the inorganic ash obtained in (b) as a sample, the amount of sodium is determined by elemental analysis from a result obtained by fluorescence X-ray analysis with a System 3370E, produced by Rigaku K.K., and expressed in wt%.

(d) Relative Viscosity

Dried pellets of the polyamide composite material are dissolved into 96% concentrated sulfuric acid to adjust the concentration to 1g/dl. The relative viscosity is measured at 25°C.

(e) Dispersion of Layered Silicate in the Polyamide Composite Material

A small piece of the material cut out from a bending test specimen is embedded in epoxy resin. Photographs are taken with a transmission electron microscopy (TEM) (Type JEM-200CX, Acceleration Voltage 100kV, by Japan Electrics) for slices prepared with a diamond knife. Using the photographs, the dispersity is determined by calculating the approximate size of the silicate layers of the layered silicate in the polyamide resin.

(f) Tensile Strength, Tensile Modulus and Tensile Elongation at Break

Measured in accordance with ASTM D-638.

(g) Flexural Strength and Flexural Modulus

Measured in accordance with ASTM D-790.

(h) Izod Impact Strength

Measured on a notched specimen having a thickness of 3.2mm in accordance with ASTM D-256.

(i) Heat Distortion Temperature

Measured in accordance with ASTM D-648 (load: 1.86 MPa).

EXAMPLE 1

300g of fluoromica (corresponding to 0.33 mole in cation exchange capacity) was added to a solution (premixed at 90°C) of 74.6g (0.66 mole) of ε-caprolactam, 10 kg of water and 76.1g of an 85 wt% aqueous solution of phosphoric acid (0.66 mole), and a suspension containing treated fluoromica was obtained after agitating for 1 hour at 90 °C with a homogenizer. The treated fluoromica was recovered by repeated washing with water and filtration with a Buchner funnel, and then dried and crushed.

Into a 30L volume reactor which was in advance charged with 10 kg of ε-caprolactam and 1 kg of water were introduced 200g of the above-described treated fluoromica, and the temperature and the pressure were elevated to 260°C and 15kg/cm$^2$, respectively. The reaction system was maintained at a temperature of 260°C and a pressure of

$5kg/cm^2$ for 2 hours to conduct polymerisation while gradually releasing steam, followed by pressure release to atmospheric pressure over a 1 hour period. After standing under conditions of atmospheric pressure and 260°C for 40 minutes, the reaction mixture was withdrawn in strands, cooled to solidify, and cut to obtain pellets of nylon-6 composite material.

The pellets were refined in 95°C hot water for 8 hours to eliminate residual monomer or oligomers and then dried in vacuo. The resulting pellets were injection moulded in an injection moulding machine (125/75MS Model, manufactured by Mitsubishi Heavy Industries, Ltd.) at a cylinder temperature of 260°C and a mould temperature of 70°C for an injection time of 6 seconds and a cooling time of 10 seconds to prepare 3.2 mm thick specimens for testing.

EXAMPLE 2

300 g of montmorillonite (corresponding to 0.35 mole in cation exchange capacity) was added to a solution (pre-mixed at 90°C) of 79.1g (0.7 mole) of ε-caprolactam, 10 kg of water and 80.7g of an 85 wt% aqueous solution of phosphoric acid (0.7 mole), and a suspension containing treated montmorillonite was obtained after agitating for 1 hour at 90 °C with a homogenizer. The treated montmorillonite was recovered by repeated washing with water and filtration with a Buchner funnel, and then dried and crushed.

Into a 30L volume reactor which was in advance charged with 10 kg of ε-caprolactam and 1 kg of water was introduced 200g of the above-described treated montmorillonite. Pellets of nylon-6 composite material were prepared in the same manner as in Example 1. The pellets were refined in 95°C hot water for 8 hours to eliminate residual monomer or oligomers and dried in vacuo. The resulting pellets were injection moulded in the same manner as in Example 1 to prepare 3.2mm thick specimens for testing.

EXAMPLE 3

300 g of fluoromica (corresponding to 0.33 mole in cation exchange capacity) was added to a solution (pre-mixed at 90°C) of 142g (0.66 mole) of aminododecanoic acid, 10 kg of water and 76.1g of an 85 wt% aqueous solution of phosphoric acid (0.66 mole), and a suspension containing treated fluoromica was obtained after agitating for 1 hour at 90 °C with a homogenizer. The treated fluoromica was recovered by repeated washing with water and filtration with a Buchner funnel, and then dried and crushed.

Into a 30L volume reactor which was in advance charged with 10 kg of ε-caprolactam and 1 kg of water was introduced 220g of the above-described treated fluoromica. Pellets of nylon-6 composite material were prepared in the same manner as in Example 1. The pellets were refined in 95°C hot water for 8 hours to eliminate residual monomer or oligomers and dried in vacuo. The resulting pellets were injection moulded in the same manner as in Example 1 to prepare 3.2mm thick specimens for testing.

EXAMPLE 4

300 g of montmorillonite (corresponding to 0.35 mole in cation exchange capacity) was added to a solution (pre-mixed at 90°C) of 150g (0.70 mole) of aminododecanoic acid, 10 kg of water and 80.7g of an 85 wt% aqueous solution of phosphoric acid (0.7 mole), and a suspension containing treated montmorillonite was obtained after agitating for 1 hour at 90 °C with a homogenizer. The treated montmorillonite was recovered by repeated washing with water and filtration with a Buchner funnel, and then dried and crushed.

Into a 30L volume reactor which was in advance charged with 10 kg of ε-caprolactam and 1 kg of water was introduced 220g of the above-described treated montmorillonite. Pellets of nylon-6 composite material were prepared in the same manner as in Example 1. The pellets were refined in 95°C hot water for 8 hours to eliminate residual monomer or oligomers and dried in vacuo. The resulting pellets were injection moulded in the same manner as in Example 1 to prepare 3.2mm thick specimens for testing.

COMPARATIVE EXAMPLE 1

300 g of fluoromica (corresponding to 0.33 mole in cation exchange capacity) was added to a solution (pre-mixed at room temperature) of 3.7g (0.033 mole) of ε-caprolactam, 10 kg of water and 3.8g of an 85 wt% aqueous solution of phosphoric acid (0.033 mole). A suspension containing treated fluoromica was obtained after agitating for 1 hour at 90 °C with a homogenizer. The treated fluoromica was recovered by repeated washing with water and filtration with a Buchner funnel, and then dried and crushed.

Pellets of nylon-6 composite material were prepared in the same manner as in Example 1, except for using 180g of the treated fluoromica introduced into an autoclave. The pellets were refined in 95°C hot water for 8 hours to eliminate residual monomer or oligomers and dried in vacuo. The resulting pellets were injection moulded in the same

manner as in Example 1 to prepare 3.2mm thick specimens for testing.

COMPARATIVE EXAMPLE 2

300g of montmorillonite (corresponding to 0.35 mole in cation exchange capacity) was added to a solution (pre-mixed at room temperature) of 3.9g (0.035 mole) of ε-caprolactam, 10 kg of water and 4.0g of an 85 wt% aqueous solution of phosphoric acid (0.035 mole). A suspension containing treated montmorillonite was obtained after agitating for 1 hour at 90 °C with a homogenizer. The treated montmorillonite was recovered by repeated washing with water and filtration with a Buchner funnel, and then dried and crushed.

Pellets of nylon-6 composite material were prepared in the same manner as in Example 1, except for using 180g of the treated fluoromica introduced into an autoclave. The pellets were refined in 95°C hot water for 8 hours and dried in vacuo to eliminate residual monomer or oligomers. The resulting pellets were injection moulded in the same manner as in Example 1 to prepare 3.2mm thick specimens for testing.

Table 1 summarises inorganic ash content, relative viscosity, sodium content of the inorganic ash and properties of the test specimens of the nylon-6 composite materials obtained in Examples 1 to 4 and Comparative Examples 1 and 2.

TABLE 1

| | | Example No. | | | | Compara. Example No. | |
|---|---|---|---|---|---|---|---|
| | | 1 | 2 | 3 | 4 | 1 | 2 |
| | Polyamide resin | Nylon 6 | Nylon 6 | Nylon 6 | Nylon 6 | Nylon 6 | Nylon 6 |
| | Layered silicate | Fluoromica | Montmorillonite | Fluoromica | Montmorillonite | Fluoromica | Montmorillonite |
| Polyamide Composite Material | Inorganic ash content | 2.0 | 2.0 | 2.0 | 2.0 | 2.0 | 2.0 |
| | Relative viscosity | 2.6 | 2.6 | 2.6 | 2.6 | 2.6 | 2.6 |
| | Sodium content of inorganic ash | 1.0 | 0.6 | 1.3 | 0.8 | 3.2 | 3.0 |
| Specimen Properties | Tensile Strength(MPa) | 97 | 92 | 94 | 91 | 80 | 79 |
| | Tensile modulus(MPa) | 3250 | 3050 | 3050 | 2900 | 2570 | 2510 |
| | Tensile elongation at break (%) (standard deviation $\sigma_n$) | 78 (0.79) | 134 (1.55) | 103 (0.58) | 163 (1.98) | 170 (8.32) | >200 (9.12) |
| | Flexural strength(MPa) | 162 | 160 | 144 | 169 | 104 | 103 |
| | Flexural modulus(MPa) | 4350 | 4120 | 4500 | 4360 | 3030 | 3020 |
| | Izod impact strength (J/m) | 63 | 57 | 61 | 60 | 57 | 55 |
| | Heat distortion temperature(°C) | 138 | 128 | 131 | 121 | 72 | 77 |

EXAMPLE 5

To a solution containing 1 kg of ε-caprolactam (corresponding to 10 wt% of the total monomer) and 2 kg of water were added 200 g of fluoromica (corresponding to 0.22 mole in cation exchange capacity) and 38g of an 85 wt% aqueous solution of phosphoric acid (0.33 mole). A suspension containing treated fluoromica was obtained after agitating for 1 hour at 90 °C with a homogenizer. The suspension was then placed into a 30L volume autoclave which was in advance charged with 9 kg of ε-caprolactam. The temperature and pressure were elevated to 260°C and 5kg/cm$^2$, respectively. The reaction system was maintained at a temperature of 260°C and a pressure of 5kg/cm$^2$ for 2 hours to conduct polymerisation while gradually releasing steam, followed by pressure release to atmospheric pressure over a 1 hour period. After standing under conditions of atmospheric pressure and 260°C for 40 minutes, pellets of nylon-6 composite material were prepared in the same manner as in Example 1.
The pellets were refined in 95°C hot water for 8 hours to eliminate residual monomer or oligomers and alkali metal salt as by-products and dried in vacuo. The resulting pellets were injection moulded in the same manner as in Example 1 to prepare 3.2mm thick specimens for testing.

EXAMPLE 6

Pellets of nylon-6 composite material were prepared in the same manner as in Example 5, except for using 200g of montmorillonite (corresponding to 0.23 mole in cation exchange capacity) in place of 200g of fluoromica and using 39.8g of an 85 wt% aqueous solution of phosphoric acid (0.35 mole). The pellets were refined in 95°C hot water for 8 hours to eliminate residual monomer or oligomers and alkali metal salt as by-products and dried in vacuo. The resulting pellets were injection moulded in the same manner as in Example 1 to prepare 3.2mm thick specimens for testing.

EXAMPLE 7

In a 10L volume autoclave were charged a dispersed mixture containing 2kg of water and 1kg of ω-laurolactam (corresponding to 10 wt% of the total monomer), 200g of fluoromica (corresponding to 0.22 mole in cation exchange capacity) and 38.0g of an 85 wt% aqueous solution of phosphoric acid (0.33 mole). The mixture containing treated fluoromica was obtained after agitating at 160°C for 2 hours under a closed condition. Then, the mixture was transported into a 30 L volume autoclave which was in advance charged with 9 kg of ω-laurolactam. The temperature and the pressure were elevated to 280°C and 23kg/cm$^2$ , respectively.
The reaction system was maintained at a temperature of 290~300°C and a pressure of 23kg/cm$^2$ for 12 hours to conduct polymerisation while gradually releasing steam, followed by pressure release to atmospheric pressure over a 1 hour period. After standing under conditions of atmospheric pressure for 40 minutes, the reaction mixture was withdrawn in strands, cooled to solidify, and cut to obtain pellets of nylon-12 composite material. The pellets were refined in 95°C hot water for 8 hours to eliminate alkali metal salt as a by-product and dried in vacuo. The resulting pellets were injection moulded in an injection moulding machine (125/75MS Model, manufactured by Mitsubishi Heavy Industries, Ltd.) at a cylinder temperature of 230°C and a mould temperature of 70°C for an injection time of 6 seconds and a cooling time of 10 seconds to prepare 3.2 mm thick specimens for testing.

COMPARATIVE EXAMPLE 3

To a solution containing 2kg of water and 5kg of ε-caprolactam (corresponding to 50 wt% of the total monomer) were added 200g of fluoromica (corresponding to 0.22 mole in cation exchange capacity) and 6.3g of an 85 wt% aqueous solution of phosphoric acid (0.055 mole). The mixture was agitated for 10 minutes at room temperature with a homogenizer. The suspension was then placed into a 30L volume autoclave which was in advance charged with 5 kg of ε-caprolactam. The temperature and the pressure were elevated to 260°C and 3kg/cm$^2$, respectively. The reaction system was maintained at a temperature of 260°C and a pressure of 3kg/cm$^2$ for 2 hours to conduct polymerisation while gradually releasing steam, followed by pressure release to atmospheric pressure over a 1 hour period. After standing under conditions of atmospheric pressure and 260°C for 40 minutes, pellets of nylon-6 composite material were prepared in the same manner as in Example 1.
The pellets were refined in 95°C hot water for 8 hours to eliminate residual monomer or oligomers and alkali metal salt as by-products and then dried in vacuo. The resulting pellets were injection moulded in the same manner as in Example 1 to prepare 3.2mm thick specimens for testing.

COMPARATIVE EXAMPLE 4

Pellets of nylon-6 composite material were prepared in the same manner as in Comparative Example 3, except for using 200g of montmorillonite (corresponding to 0.23 mole in cation exchange capacity) in place of 200g of fluoromica and using 6.6g of an 85 wt% aqueous solution of phosphoric acid (0.058 mole). The pellets were refined in 95°C hot water for 8 hours to eliminate residual monomer or oligomers and alkali metal salt as by-products and then dried in vacuo. The resulting pellets were injection moulded in the same manner as in Example 1 to prepare 3.2mm thick specimens for testing.

COMPARATIVE EXAMPLE 5

200g of montmorillonite (corresponding to 0.23 mole in cation exchange capacity) was dispersed in 3kg of water in a 30 L volume autoclave, and then 10kg of ε-caprolactam and 23.6g of an 85wt% aqueous solution of phosphoric acid (0.23 mole) were added thereto. The mixture was agitated with a homogenizer for 10 minutes at room temperature and then the temperature and the pressure were, under nitrogen, elevated to 260°C and 3kg/cm$^2$, respectively. The reaction system was maintained at a temperature of 260°C and a pressure of 3kg/cm$^2$ for 3 hours to conduct polymerisation while gradually releasing steam, followed by pressure release to atmospheric pressure over a 1 hour period. After standing under conditions of atmospheric pressure and 260°C for 40 minutes, pellets of nylon-6 composite material were prepared in the same manner as in Example 1. The pellets were refined in 95°C hot water for 8 hours to eliminate residual monomer or oligomers and alkali metal salt as by-products and then dried in vacuo. The resulting pellets were injection moulded in the same manner as in Example 1 to prepare 3.2mm thick specimens for testing.

COMPARATIVE EXAMPLE 6

To a dispersed mixture of 2kg of water and 2kg of ω-laurolactam (corresponding to 10 wt% of the total monomer) were added 200g of fluoromica (corresponding to 0.22 mole in cation exchange capacity) and 6.3g of an 85 wt% aqueous solution of phosphoric acid (0.055 mole). The mixture was agitated with a homogenizer for 10 minutes at room temperature. The suspension was then placed into a 30L volume autoclave which was in advance charged with 8kg of ω-laurolactam. The temperature and the pressure were elevated to 280°C and 23kg/cm$^2$, respectively. The reaction system was maintained at a temperature of 290~300°C and a pressure of 23kg/cm$^2$ for 12 hours to conduct polymerisation while gradually releasing steam, followed by pressure release to atmospheric pressure over a 1 hour period. After standing under conditions of atmospheric pressure for 40 minutes, the reaction mixture was withdrawn in strands, cooled to solidify, and cut to obtain pellets of nylon-12 composite material.

The pellets were refined in 95°C hot water for 8 hours to eliminate alkali metal salt as a by-product and then dried in vacuo. The resulting pellets were injection moulded in the same manner as in Example 7 to prepare 3.2mm thick specimens for testing.

Table 2 summarises inorganic ash content, relative viscosity, sodium content of the inorganic ash and properties of the test specimens of the nylon-6 and nylon-12 composite materials obtained in Examples 5 to 7 and Comparative Examples 3 to 6.

TABLE 2

| | | Example No. | | | Compara. Example No. | | | |
|---|---|---|---|---|---|---|---|---|
| | | 5 | 6 | 7 | 3 | 4 | 5 | 6 |
| Polyamide Composite Material | Polyamide resin | Nylon 6 | Nylon 6 | Nylon 12 | Nylon 6 | Nylon 6 | Nylon 6 | Nylon 12 |
| | Layered silicate | Fluoromica | Montmorillonite | Fluoromica | Fluoromica | Montmorillonite | Montmorillonite | Fluoromica |
| | Inorganic ash content | 2.0 | 2.0 | 2.0 | 2.0 | 2.0 | 2.0 | 2.0 |
| | Relative viscosity | 2.6 | 2.6 | 2.6 | 2.6 | 2.6 | 2.6 | 2.6 |
| | Sodium content of inorganic ash | 1.4 | 1.1 | 1.1 | 2.8 | 2.9 | 2.5 | 2.9 |
| Specimen Properties | Tensile Strength(MPa) | 91 | 88 | 84 | 83 | 80 | 77 | 79 |
| | Tensile modulus(MPa) | 3040 | 3000 | 2380 | 2630 | 2560 | 2630 | 2320 |
| | Tensile elongation at break (%) (standard deviation $\sigma_n$) | 97 (1.14) | 120 (1.77) | 163 (0.98) | 146 (6.91) | 195 (8.75) | 151 (7.75) | >200 (6.33) |
| | Flexural strength(MPa) | 148 | 158 | 98 | 123 | 110 | 128 | 114 |
| | Flexural modulus(MPa) | 4400 | 4070 | 2620 | 3470 | 3100 | 3320 | 2400 |
| | Izod impact strength (J/m) | 64 | 56 | 76 | 55 | 55 | 55 | 52 |
| | Heat distortion temperature (°C) | 128 | 126 | 73 | 89 | 90 | 109 | 64 |

EXAMPLE 8

In a 30L volume autoclave were charged 10kg of $\varepsilon$-caprolactam, 200g of fluoromica (corresponding to 0.22 mole in cation exchange capacity), 50.7g of an 85 wt% aqueous solution of phosphoric acid (0.44 mole) , and 1kg of water. The temperature and the pressure were elevated to 260°C and 15kg/cm$^2$, respectively. The reaction system was maintained at a temperature of 260°C and a pressure of 15kg/cm$^2$ for 2 hours to conduct polymerisation while gradually releasing steam, followed by pressure release to atmospheric pressure over a 1 hour period. After standing under conditions of atmospheric pressure for 40 minutes, the reaction mixture was withdrawn in strands, cooled to solidify, and

cut to obtain pellets of nylon-6 composite material. The pellets were refined in 95°C hot water for 8 hours to eliminate residual monomer or oligomers and alkali metal salt as by-products and dried in vacuo. The resulting pellets were injection moulded in the same manner as in Example 1 to prepare 3.2mm thick specimens for testing.

EXAMPLE 9

Pellets of nylon-6 composite material were prepared in the same manner as in Example 8, except for using 200g of montmorillonite (corresponding to 0.23 mole in cation exchange capacity) in place of 200g of fluoromica and using 53.0g of an 85 wt% aqueous solution of phosphoric acid (0.46 mole). The pellets were refined in 95°C hot water for 8 hours to eliminate residual monomer or oligomers and alkali metal salt as by-products and then dried in vacuo. The resulting pellets were injection moulded in the same manner as in Example 1 to prepare 3.2mm thick specimens for testing.

EXAMPLE 10

In a 30L volume autoclave were charged 10kg of ω-laurolactam, 200g of fluoromica (corresponding to 0.22 mole in cation exchange capacity), 50.7g of an 85 wt% aqueous solution of phosphoric acid (0.44 mole) , and 1.5kg of water. The temperature and the pressure were elevated to 280°C and 22kg/cm$^2$, respectively. The reaction system was maintained at a temperature of 290~300°C and a pressure of 22kg/cm$^2$ for 12 hours to conduct polymerisation while gradually releasing steam, followed by pressure release to atmospheric pressure over a 1 hour period. After standing under conditions of atmospheric pressure for 40 minutes, the reaction mixture was withdrawn in strands, cooled to solidify, and cut to obtain pellets of nylon-12 composite material. The pellets were refined in 95°C hot water for 8 hours to eliminate alkali metal salt as a by-product and dried in vacuo. The resulting pellets were injection moulded in the same manner as in Example 7 to prepare 3.2mm thick specimens for testing.

COMPARATIVE EXAMPLE 7

In a 30L volume autoclave were charged 10kg of ε-caprolactam, 200g of fluoromica (corresponding to 0.22 mole in cation exchange capacity), 6.3g of an 85 wt% aqueous solution of phosphoric acid (0.055 mole) , and 1kg of water. The temperature and the pressure were elevated to 260°C and 3kg/cm$^2$, respectively. The reaction system was maintained at a temperature of 260°C and a pressure of 3kg/cm$^2$ for 2 hours to conduct polymerisation while gradually releasing steam, followed by pressure release to atmospheric pressure over a 1 hour period. After standing under conditions of atmospheric pressure for 40 minutes, pellets of nylon-6 composite material were prepared in the same manner as in Example 1. The pellets were refined in 95°C hot water for 8 hours to eliminate residual monomer or oligomers and alkali metal salt as by-products and dried in vacuo. The resulting pellets were injection moulded in the same manner as in Example 1 to prepare 3.2mm thick specimens for testing.

COMPARATIVE EXAMPLE 8

Pellets of nylon-6 composite material were prepared in the same manner as in Comparative Example 6, except for using 200g of montmorillonite (corresponding to 0.23 mole in cation exchange capacity) in place of 200g of fluoromica and using 6.6g of an 85 wt% aqueous solution of phosphoric acid (0.058 mole). The pellets were refined in 95°C hot water for 8 hours to eliminate residual monomer or oligomers and alkali metal salt as by-product and then dried in vacuo. The resulting pellets were injection moulded in the same manner as in Example 1 to prepare 3.2mm thick specimens for testing.

Table 3 summarises the inorganic ash content, relative viscosity, sodium content of the inorganic ash and properties of the test specimens of the nylon-6 and nylon-12 composite materials obtained in Examples 8 to 10 and Comparative Examples 7 to 8.

TABLE 3

| | | Example No. | | | Compara. Example No. | |
|---|---|---|---|---|---|---|
| | | 8 | 9 | 10 | 7 | 8 |
| Polyamide Composite Material | Polyamide resin | Nylon 6 | Nylon 6 | Nylon 12 | Nylon 6 | Nylon 6 |
| | Layered silicate | Fluoromica | Montmorillonite | Fluoromica | Fluoromica | Montmorillonite |
| | Inorganic ash content | 2.0 | 2.0 | 2.0 | 2.0 | 2.0 |
| | Relative viscosity | 2.6 | 2.6 | 2.6 | 2.6 | 2.6 |
| | Sodium content of inorganic ash | 1.3 | 1.2 | 1.2 | 2.7 | 2.5 |
| Specimen Properties | Tensile Strength(MPa) | 92 | 85 | 83 | 83 | 78 |
| | Tensile modulus(MPa) | 3030 | 2970 | 2370 | 2610 | 2630 |
| | Tensile elongation at break (%) (standard deviation $\sigma_n$) | 99 (1.36) | 128 (1.90) | 169 (1.11) | 144 (7.33) | 155 (8.08) |
| | Flexural strength(MPa) | 146 | 155 | 100 | 123 | 127 |
| | Flexural modulus(MPa) | 4420 | 3960 | 2640 | 3480 | 3300 |
| | Izod impact strength (J/m) | 64 | 55 | 72 | 55 | 56 |
| | Heat distortion temperature (°C) | 129 | 121 | 75 | 89 | 107 |

EXAMPLE 11

200g of treated fluoromica prepared in the same manner as in Example 1 was blended with nylon-6 resin (A1030BRL, available from Unitika Ltd.), then melt-kneaded in an extruder with two screws (Type:PCM-30, produced by Ikegai Tekko) at a cylinder temperature of 260°C. The reactant was then withdrawn in strands, cooled to solidify, and cut to obtain pellets of nylon-6 composite material. The pellets as dried were injection moulded in the same manner as in Example 1 to prepare 3.2mm thick specimens for testing.

EXAMPLE 12

Pellets of nylon-6 composite material were prepared in the same manner as in Example 11, except for using 200g of treated montmorillonite prepared in the same manner as in Example 2. The dried pellets were injection moulded in the same manner as in Example 1 to prepare 3.2mm thick specimens for testing.

EXAMPLE 13

200g of treated fluoromica prepared in the same manner as in Example 1 was blended with nylon-66 resin (A125J, available from Unitika Ltd.), then melt-kneaded in an extruder with two screws (Type:PCM-30, produced by Ikegai Tekko) at a cylinder temperature of 280°C. The reactant was then withdrawn in strands, cooled to solidify, and cut to obtain pellets of nylon-66 composite material. The resulting pellets were injection moulded in an injection moulding machine (125/75MS Model, manufactured by Mitsubishi Heavy Industries, Ltd.) at a cylinder temperature of 280°C and

a mould temperature of 70°C for an injection time of 6 seconds and a cooling time of 10 seconds to prepare 3.2 mm thick specimens for testing.

COMPARATIVE EXAMPLE 9

Pellets of nylon-6 composite material were prepared in the same manner as in Example 11, except for using 180g of treated fluoromica prepared in the same manner as in Comparative Example 1. The dried pellets were injection moulded in the same manner as in Example 1 to prepare 3.2mm thick specimens for testing.

COMPARATIVE EXAMPLE 10

Pellets of nylon-6 composite material were prepared in the same manner as in Example 11, except for using 180g of treated montmorillonite prepared in the same manner as in Comparative Example 2. The dried pellets were injection moulded in the same manner as in Example 1 to prepare 3.2mm thick specimens for testing.

COMPARATIVE EXAMPLE 11

Pellets of nylon-66 composite material were prepared in the same manner as in Example 13, except for using 180g of treated fluoromica prepared in the same manner as in Comparative Example 1. The dried pellets were injection moulded in the same manner as in Example 13 to prepare 3.2mm thick specimens for testing.

Table 4 summarises the inorganic ash content, relative viscosity, sodium content of the inorganic ash and properties of the test specimens of the nylon-6 and nylon-66 composite materials obtained in Examples 11 to 13 and Comparative Examples 9 to 11.

TABLE 4

| | | Example No. | | | Compara. Example No. | | |
|---|---|---|---|---|---|---|---|
| | | 11 | 12 | 13 | 9 | 10 | 11 |
| Polyamide Composite Material | Polyamide resin | Nylon 6 | Nylon 6 | Nylon 66 | Nylon 6 | Nylon 6 | Nylon 66 |
| | Layered silicate | Fluoromica | Montmorillonite | Fluoromica | Fluoromica | Montmorillonite | Fluoromica |
| | Inorganic ash content | 2.0 | 2.0 | 2.0 | 2.0 | 2.0 | 2.0 |
| | Relative viscosity | 2.5 | 2.5 | 2.7 | 2.5 | 2.5 | 2.7 |
| | Sodium content of inorganic ash | 1.0 | 0.6 | 1.0 | 3.2 | 3.0 | 3.2 |

TABLE 4 (continued)

| | | Example No. | | | Compara. Example No. | | |
|---|---|---|---|---|---|---|---|
| | | 11 | 12 | 13 | 9 | 10 | 11 |
| Specimen Properties | Tensile Strength(MPa) | 89 | 81 | 82 | 79 | 78 | 76 |
| | Tensile modulus(MPa) | 2960 | 2750 | 2660 | 2550 | 2480 | 2440 |
| | Tensile elongation at break (%) (standard deviation $\sigma_n$) | 126 (3.65) | 167 (4.43) | 36 (3.98) | 180 (8.77) | >200 (10.41) | 43 (9.63) |
| | Flexural strength(MPa) | 133 | 150 | 155 | 104 | 101 | 133 |
| | Flexural modulus(MPa) | 3700 | 3620 | 3810 | 3030 | 2920 | 3000 |
| | Izod impact strength (J/m) | 57 | 57 | 52 | 56 | 54 | 50 |
| | Heat distortion temperature (°C) | 103 | 107 | 116 | 73 | 71 | 81 |

Specimens for the bending test obtained in Examples 1 to 13 were observed by TEM photograph, and it was found that the thickness of each layer of layered silicates was approximately 1 nm and the length ranged from 20 to 40nm. For all the Examples, the silicate layers were confirmed to be dispersed uniformly in the polyamide resin on a molecular level.

While the invention has been described in detail and with reference to specific examples thereof, it will be apparent to one skilled in the art that various changes and modification can be made therein without departing from the spirit and scope thereof.

## Claims

**1.** A polyamide composite material comprising

(A) a polyamide resin and

(B) silicate layers originating from a montmorillonite, dispersed in said polyamide resin on a molecular level, wherein the content of sodium in an inorganic ash of said polyamide composite material is 2.1 wt% or less.

**2.** A polyamide composite material comprising

(A) a polyamide resin and

(B) silicate layers originating from a swellable fluoromica, dispersed in said polyamide resin on a molecular level,
wherein the content of sodium in an inorganic ash of said polyamide composite material is 2.7 wt% or less.

**3.** A polyamide composite material comprising

(A) a polyamide resin and

(B) silicate layers originating from a vermiculite, dispersed in said polyamide resin on a molecular level, wherein the content of sodium in an inorganic ash of said polyamide composite material is 1.7 wt% or less.

**4.** A polyamide composite material comprising

(A) a polyamide resin and

(B) silicate layers originating from a hectorite, dispersed in said polyamide resin on a molecular level, wherein the content of sodium in an inorganic ash of said polyamide composite material is 1.5 wt% or less.

**5.** A polyamide composite material according to anyone of Claims 1 to 4, wherein the polyamide resin is nylon 6, a nylon 6-based copolymer, nylon 66, a nylon 66-based copolymer, nylon 11, a nylon 11-based copolymer, nylon 12 and a nylon 12-based copolymer.

**6.** Process for the manufacture of a polyamide composite material according to anyone of the preceding Claims, comprising the steps of preparing a mixture comprising the monomer or monomers for forming the polyamide and the layered silicate and subjecting the mixture to polymerisation.

**7.** Process according to Claim 6, wherein the mixture additionally comprises an acid.

**8.** Process according to Claim 7, comprising the additional step of treating the polymerised mixture with hot water.

**9.** Process according to anyone of Claims 6 to 8, wherein the polymerisation is conducted under a temperature of 240 to 300°C and a pressure of 2 to 30 $kg/cm^2$ for 1 to 5 hours.

**10.** Process for producing a polyamide composite material according to anyone of Claims 1 to 5, comprising the step of melt kneading a mixture comprising the polyamide and the layered silicate.

**11.** Use of the polyamide composite material according to anyone of Claims 1 to 5 for moulded articles, films, sheets and fibres.

European Patent Office

# EUROPEAN SEARCH REPORT

Application Number
EP 99 10 2774

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | EP 0 771 854 A (MITSUBISHI CHEM CORP) 7 May 1997<br>* page 2, line 58 - page 3, line 2 *<br>* page 3, line 35 - line 39 *<br>* table 1 *<br>--- | 1-11 | C08K3/34<br>C08L77/00 |
| X | EP 0 358 415 A (UBE INDUSTRIES ;TOYOTA MOTOR CO LTD (JP); TOYODA CHUO KENKYUSHO KK) 14 March 1990<br>* tables 1-4 *<br>* example 4 *<br>* claims 1-5,18 *<br>----- | 1-11 | |
| | | | TECHNICAL FIELDS SEARCHED (Int.Cl.6) |
| | | | C08K |

The present search report has been drawn up for all claims

| Place of search | Date of completion of the search | Examiner |
|---|---|---|
| THE HAGUE | 28 May 1999 | Siemens, T |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 99 10 2774

This annex lists the patent family members relating to the patent documents cited in the above-mentioned European search report.
The members are as contained in the European Patent Office EDP file on
The European Patent Office is in no way liable for these particulars which are merely given for the purpose of information.

28-05-1999

| Patent document cited in search report | Publication date | Patent family member(s) | Publication date |
|---|---|---|---|
| EP 0771854 A | 07-05-1997 | JP 9183910 A | 15-07-1997 |
| | | US 5747575 A | 05-05-1998 |
| EP 0358415 A | 14-03-1990 | JP 2069562 A | 08-03-1990 |
| | | JP 7039540 B | 01-05-1995 |
| | | JP 2102261 A | 13-04-1990 |
| | | JP 8019230 B | 28-02-1996 |
| | | JP 2105856 A | 18-04-1990 |
| | | JP 2603314 B | 23-04-1997 |
| | | JP 2173160 A | 04-07-1990 |
| | | JP 2565557 B | 18-12-1996 |
| | | DK 439889 A | 07-03-1990 |
| | | FI 894148 A | 07-03-1990 |
| | | US 5248720 A | 28-09-1993 |

EPO FORM P0459

For more details about this annex : see Official Journal of the European Patent Office, No. 12/82